# EUROPEAN PATENT SPECIFICATION

(11) **EP 1 609 584 B1**
(45) Date of publication and mention of the grant of the patent: **05.09.2007**
(21) Application number: 05102276.2
(22) Date of filing: 22.03.2005
(51) Int. Cl.: B29C 70/34, B29D 31/00

(54) **A method of manufacturing composite structural beams for aircraft**
Ein Verfahren zur Herstellung eines strukturellen Verbundträgers für Flugzeuge
Un procédé de production d'une poutre composite structurelle pour aéronef

(30) Priority: 21.06.2004 IT TO20040410
(43) Date of publication of application: 28.12.2005
(73) Proprietor: Alenia Aeronautica S.p.A., 80038 Pomigliano D'Arco (Napoli) (IT)
(72) Inventor: Suriano, Carmine, 71100 Foggia (IT)
(74) Representative: Fioravanti, Corrado

(56) References cited:
- EP-A- 1 145 829
- GB-A- 2 268 704
- US-A- 5 538 589
- US-A- 5 954 898
- US-B1- 6 217 000

## Description

The present invention relates to a method of manufacturing beams of composite material based on carbon fibre for the construction of aircraft according to claim 1.

In the aircraft construction field, until now, the method used for the fabrication of structural elements of the said type has comprised the lamination or deposition of carbon fibre matting pre-impregnated with resin in a mould. The mats are over size with respect to the final dimensions of the beam to be formed. After a polymerisation phase in an autoclave a beam is obtained the edges of which must subsequently be trimmed by means of a cutter. The cut edges must then be re-covered by securing a fabric or cladding of glass fibre with an adhesive for preventing the cut edges from being able to initiate corrosion phenomena, particularly because of the moisture in the presence of low temperatures.

In many applications in the aeronautical field, for structural reasons it is required that the web of the beam should have some locally thickened reinforcement regions. To achieve these reinforcements doublers are fabricated separately by means of lamination of carbon fibres pre-impregnated with resin. These reinforcements are polymerised separately and then cut to shape with a mill, thus obtaining a series of doublers (for example of flattened frusto-pyramid form) which are finally secured by means of adhesive onto one or both sides of the web of the beam.

US-A-5 954 898 discloses a method of manufacturing a beam of composite material based on carbon fibre for the construction of aircraft, the method comprising the steps of:
superimposing onto a support plane a plurality of pre-impregnated composite layers to obtain a first flat laminate;
cutting at least one edge of the flat laminate at a pre-determined cut angle different from 90° with respect to the support plane of the laminate;
placing the flat laminate onto a shaping tool;
hot shaping the laminate to copy the shape of the forming tool, bending at least one part of the laminate delimited by the said cut edge in such a way that the said cut edge, at the end of the bending step, defines a surface orientated substantially perpendicularly with respect to the said bent part;
applying temperature and pressure in such a way as to polymerise the resin contained in the laminates.

The present invention seeks to achieve the object of providing a method of manufacturing elongate structural elements of the type specified above, mainly addressing the problem of reducing the time, cost and the number of stages in the manufacturing process. In particular, it is desired to reduce the number of polymerisations in autoclaves, eliminate the traditional operations of trimming or cutting the edges and the subsequent final phase of application of the cladding of glass fibre onto the cut edges.

Another object of the invention is to reduce the amount of footing necessary for the traditional cutting of the edges, as well as the cost of labour for the final application of the glass fibre cladding.

A further object of the invention is to produce monolithic structural elements having a greater structural strength than those obtained by means of the traditional fabrication process discussed above.

These and other objects and advantages which will be better understood hereinafter are achieved according to the present invention by a method as defined in the annexed claims.

One preferred, but non-limitative, embodiment of the invention will now be described making reference to the attached drawings, in which:
Figure 1 is a transverse sectional view which schematically illustrates the main components of a beam formed according to the invention;
Figure 2 is a perspective view which schematically shows a cutting stage of the method of the invention;
Figures 3, 4 and 5 schematically illustrate shaping and assembling stages of the blanks of which the beam of Figure 1 is to be composed;
Figure 3A is an enlarged view of a detail of Figure 3;
Figure 6 illustrates a subsequent curing stage in an autoclave with a vacuum bag applied on a series of shaping tools of the type illustrated in Figures 4 and 5; and
Figure 7 is a transverse sectional view of the finished beam.

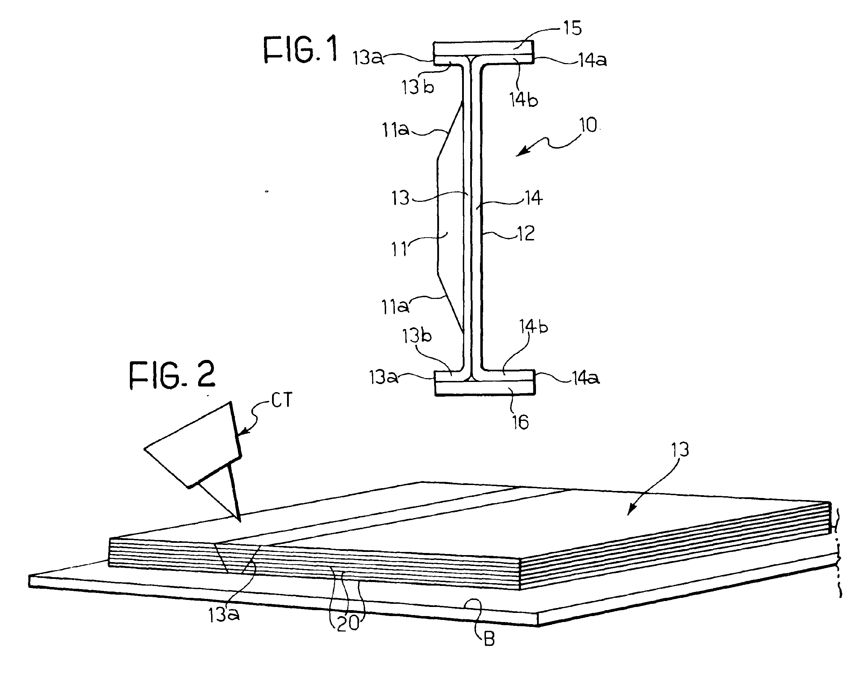

In the example illustrated and described herein refers to the manufacturing of a beam as schematically illustrated in section in Figure 1, having a substantially I or H or "double T") section with local reinforcements or thickenings on one or both faces of the web, intended to support the so-called "upper deck" of an aircraft. Clearly, the reference to this possible field of application must not in any way be interpreted as limiting the scope of the patent.

With reference to Figure 1, the reference numeral 10 generally indicates a double T beam with local reinforcements 11 on one of the faces of the web 12. These reinforcements (only one of which is visible in section in Figure 1) are spaced longitudinally along the web as is known to those skilled in the art. The beam 10 is obtained from the union of various blank elements which are then cured in a single curing phase in an autoclave as described above. These blank elements comprise: two C-shape elements 13, 14 counterposed with respect to one another which together constitute the main part of the web and part of the flanges, two flat elements 15, 16 which complete the top and bottom parts of the flanges, and a series of reinforcements 11 (so-called "doublers") or local thickenings on one of the two faces of the web.

With reference to Figure 2, each of the partly worked elements 11 - 16 is prepared by making a flat lamination of unidirectional carbon fibre mats 20 pre-impregnated with epoxy resin (also called "carbo-resin matting"). The carbo-resin mats 20 are superimposed on a support surface B thus obtaining partly worked products defined here as "flat laminates", each constituted by a stratified succession of mats 20. The flat laminates are then cut along their edges by means of a cutting machine, preferably a numerically controlled machine, which controls the movements of a cutting tool CT which is suitably inclinable to cut the edges of the flat laminates along a predetermined cut angle with respect to the plane in which the mats 20 lie.

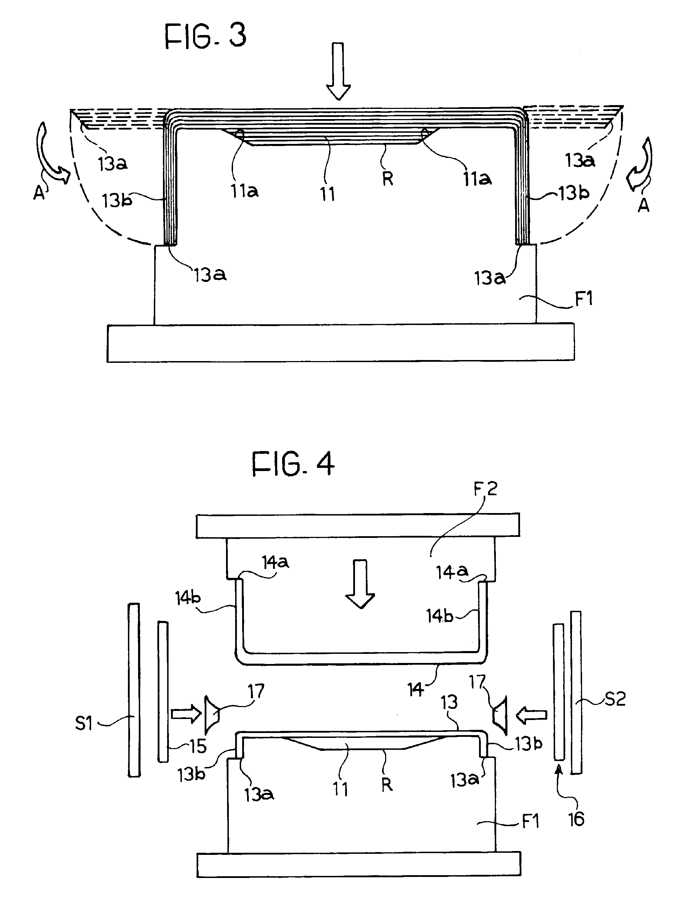

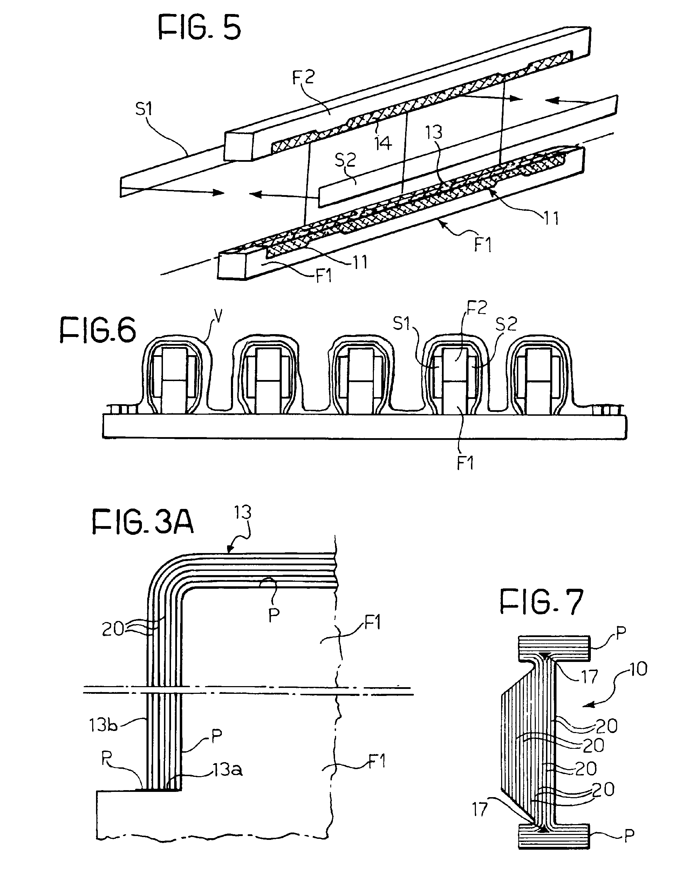

An important characteristic of the method of the invention is that some of the edges of the flat laminates are cut at a cut angle different from 90° with respect to the plane in which the mats 20 lie. In particular the oblique edges 11a of the reinforcement 11 and some edges 13a, 14a of the flat laminates intended to constitute the "C" shape elements 13, 14 are cut obliquely. Thanks to this arrangement, at the end of the subsequent hot shaping phase (Figure 3) in which the terminal parts 13b, 14b of these elements are bent at a right angle, the edges of these stratifications 20 together define a flat surface 13a, 14a orientated perpendicularly of the plane of the bent parts 13b, 14b. These edge surfaces 13a, 14a do not need any further trimming or cutting operations.

As illustrated in Figure 3, the reinforcements 11 and the flat blank 13 are placed in succession on a shaping tool F1 the shape of which they will copy during the subsequent hot shaping and curing stages. The reinforcements 11 are received in a recess R of the tool F1. By means of a hot shaping operation (known per se and therefore not described in detail here) the flat blank 13 is folded as indicated by the arrows A and constrained to copy the profile of the tool F1.

With reference to Figure 4, similar steps to those described above (flat lamination, cutting of inclined edges and hot shaping on a second tool F2) are performed on a second blank 14 constituting the second "C" section element intended to be positioned face to face with and joined to the first blank 13. Then the two flat blank elements 15, 16 are applied for completion of the flanges, inserting two resin strips 17 into the connector zones.

The shaping tool is then closed by lateral counterplates S1, S2, placed in a vacuum bag V (Figure 6) and subjected to a curing cycle in an autoclave by applying temperature and pressure in a manner known per se.

It is to be noted that between the shaping tools F1, F2, S1, S2 and the blanks to be cured there is preliminarily interposed a sheet of glass fibre P (Figure 3A) which, at the end of the polymerisation phase (Figure 7) constitutes an outer cladding layer which satisfies the so-called FST (Flammability-Smoke-Toxicity) requirements prescribed in the aeronautical environment.

The final result of the process, as schematically illustrated in Figure 7, is a composite beam 10 of carbon fibre with an external cladding layer of glass fibre matting P which continuously clads all the external surfaces of the beam, including its edges.

As will be appreciated, the method according to the invention envisages a single curing cycle (rather than two) and produces a monolithic structure with a more intimate and stronger binding of the reinforcements formed integrally with the web. The traditional phases of application of adhesive to join the reinforcements to the web are eliminated as are the operations of trimming the edges and the associated tools, and the final operations for applying the glass fibre cladding to the cut edges is no longer required. It will be appreciated, moreover, that the outer glass fibre cladding layer P is a continuous layer and intimately bound to the surfaces of the beam with consequent reduction in the risks of triggering corrosion.

It is intended that the invention shall not be limited to the embodiment described and illustrated here, which is to be considered as an example of performance of the process; the invention is on the other hand capable of associated modifications in shape, dimensions and constructional details of the beams. For example, the invention can equally be used to produce structural elements with sections of the most varied forms ("C", "L", "T", "J" etc) with or without lateral reinforcements on the web.

## Claims

1. A method for manufacturing a beam of composite material based on carbon fibre for the construction of aircraft, the beam comprising layers of carbon fibre matting pre-impregnated with resin, the method comprising the steps of:
a) superimposing onto a support plane (B) a plurality of mats (20) of carbon fibre pre-impregnated with resin so as to obtain at least one first flat laminate (13);
b) cutting at least one edge (13a, 14a) of the flat laminate at a pre-determined cut angle different from 90° with respect to the support plane (B) of the mat (20);
c) placing the flat laminate onto a shaping tool (F1);
d) hot shaping the laminate so as to copy the shape of the forming tool, bending at least one part of the laminate delimited by the said cut edge (13a, 14a) in such a way that the said cut edge (13a, 14a), at the end of the bending step, defines a surface orientated substantially perpendicularly with respect to the said bent part (13b, 14b);
e) applying temperature and pressure in such a way as to polymerise the resin contained in the matting layers (20);
wherein the step c) includes the step of:
- placing a glass fibre mat (P), also cladding the said cut edge (13a, 14a), between the shaping tool (F1) and the laminate to be polymerised in such a way as to cover the surfaces of the laminate intended to constitute the outer surfaces of the finished beam.

2. A method according to Claim 1, further including the steps of:
- prearranging at least one second laminate (11, 14, 15, 16) according to step a) and optionally according to steps b) and c) and d);
- placing the second laminate (11, 14, 15, 16) in contact with the first laminate (13) on a shaping tool before the said step e);
- performing step e) to simultaneously polymerise the resin contained in the layers of mat (20) of the first (13) and the second (11, 14, 15, 16) laminate.

3. A method according to Claim 2, in which the first laminate (13) is a longitudinally elongate element able to constitute at least one part of a web (12) of a beam (10), and the second laminate (11) is a reinforcement applied onto one face of the first laminate (13) to locally thicken the said web (12).

4. A method according to Claim 3, including the steps of:
c1) positioning the second laminate (11) in a recess (R) of the shaping tool (F1) before positioning the first laminate (13a) onto the same shaping tool (F1) in the said step c).

5. A method according to Claim 4, in which the said step c1) is preceded by the steps of:
b1) cutting at least one edge (11a) of the second flat reinforcement laminate (11) at a predetermined cut angle different from 90° with respect to the support plane (B) of the matting (20) of the second laminate (11).

## Patentansprüche

1. Verfahren zur Herstellung eines Trägers aus einem auf Kohlenstofffaser basierenden Verbundwerkstoff zur Konstruktion eines Luftfahrzeugs, wobei der Träger Schichten einer mit Harz vorimprägnierten Kohlenstofffasermattierung aufweist und das Verfahren die folgenden Schritte umfasst:
a) das Aufschichten einer Mehrzahl von mit Harz vorimprägnierten Matten (20) aus Kohlenstofffaser auf einer Auflagefläche (B), um zumindest ein erstes flaches Laminat (13) zu erhalten;
b) das Schneiden von zumindest einer Kante (13a, 14a) des flachen Laminats in einem vorbestimmten, sich von 90° unterscheidenden Schnittwinkel in Bezug auf die Auflagefläche (B) der Matte (20);
c) das Legen des flachen Laminats auf ein Formwerkzeug (F1);
d) das Warmformen des Laminats, um die Form des Formwerkzeugs nachzubilden,
wobei zumindest ein Teil des Laminats, der durch die Schnittkante (13a, 14a) begrenzt wird, solcherart gebogen wird, dass diese Schnittkante (13a, 14a) am Ende des Biegeschritts eine Oberfläche definiert, die in Bezug auf den gebogenen Teil (13b, 14b) im Wesentlichen lotrecht ausgerichtet ist;
e) das Anwenden von Temperatur und Druck in einer solchen Art und Weise, um das in den Mattenschichten (20) enthaltene Harz zu polymerisieren;
wobei der Schritt c) den folgenden Schritt umfasst;
- das Platzieren einer Glasfasermatte (P), welche auch die Schnittkante (13a, 14a) einhüllt, zwischen dem Formwerkzeug (F1) und dem zu polymerisierenden Laminat in einer solchen Art und Weise, um jene Oberflächen des Laminats zu bedecken, die dazu bestimmt sind, die Außenflächen des fertigen Trägers zu bilden.

2. Verfahren gemäß Anspruch 1, welches weiters die folgenden Schritte umfasst:
- das vorherige Anordnen von zumindest einem zweiten Laminat (11, 14, 15, 16) gemäß Schritt a) und gegebenenfalls gemäß den Schritten b) und c) und d);
- das Legen des mit dem ersten Laminat (13) in Kontakt stehenden zweiten Laminats (11, 14, 15, 16) auf ein Formwerkzeug vor dem Schritt e);
- das Durchführen von Schritt e), um das Harz, das in den Mattenschichten (20) des ersten (13) und des zweiten (11, 14, 15, 16) Laminats enthalten ist, gleichzeitig zu polymerisieren.

3. Verfahren gemäß Anspruch 2, wobei das erste Laminat (13) ein der Länge nach gestrecktes Element ist, das zumindest einen Teil eines Stegs (12) eines Trägers (10) bilden kann, und das zweite Laminat (11) eine Verstärkung ist, die an einer Fläche des ersten Laminats (13) angebracht wird, um den Steg (12) örtlich zu verdicken.

4. Verfahren gemäß Anspruch 3, einschließlich der folgenden Schritte:
c1) das Platzieren des zweiten Laminats (11) in einer Vertiefung (R) des Formwerkzeugs (F1) vor dem Platzieren des ersten Laminats (13a) auf demselben Formwerkzeug (F1) in Schritt c).

5. Verfahren gemäß Anspruch 4, wobei dem Schritt c1) die folgenden Schritte vorausgehen:
b1) das Schneiden von zumindest einer Kante (11a) des zweiten flachen Verstärkungslaminats (11) in einem vorbestimmten, sich von 90° unterscheidenden Schnittwinkel in Bezug auf die Auflagefläche (B) der Mattierung (20) des zweiten Laminats (11).

## Revendications

1. Procédé pour fabriquer une poutre en matériau composite à base de fibre de carbone pour la construction d'un avion, la poutre comprenant des couches de mat de fibre de carbone pré-imprégnées de résine, le procédé comprenant les étapes consistant à :
a) superposer sur un plan de support (B) une pluralité de mats (20) de fibre de carbone pré-impregnés de résine de façon à obtenir au moins un premier stratifié plat (13) ;
b) couper au moins un bord (13a, 14a) du stratifié plat à un angle de coupe prédéterminé différent de 90° par rapport au plan de support (B) du mat (20) ;
c) disposer le stratifié plat sur un outil de formage (F1) ;
d) thermoformer le stratifié de façon à copier la forme de l'outil de formage, courber au moins une partie du stratifié délimitée par ledit bord de coupe (13a, 14a) de telle sorte que ledit bord de coupe (13a, 14a), à la fin de l'étape de courbure, définisse une surface orientée sensiblement perpendiculairement par rapport à ladite partie courbée (13b, 14b) ;
e) appliquer une température et une pression de façon à polymériser la résine contenue dans les couches de mat (20) ;
dans lequel l'étape c) comprend l'étape consistant à :
- disposer un mat de fibre de verre (P), revêtant également ledit bord de coupe (13a, 14a), entre l'outil de formage (F1) et le stratifié devant être polymérisé, de façon à couvrir les surfaces du stratifié conçues pour constituer les surfaces extérieures de la poutre finie.

2. Procédé selon la revendication 1, comprenant de plus les étapes consistant à :
- pré-agencer au moins un deuxième stratifié (11, 14, 15, 16) selon l'étape a), et, de façon optionnelle, selon les étapes b) et c) et d) ;
- disposer le deuxième stratifié (11, 14, 15, 16) en contact avec le premier stratifié (13) sur un outil de formage avant ladite étape e) ;
- effectuer l'étape e) de façon à polymériser simultanément la résine contenue dans les couches de mat (20) du premier (13) et du deuxième (11, 14, 15, 16) stratifiés.

3. Procédé selon la revendication 2, dans lequel le premier stratifié (13) est un élément longitudinalement allongé susceptible de constituer au moins une partie d'une lame (12) d'une poutre (10), et le deuxième stratifié (11) est un renfort appliqué sur une face du premier stratifié (13) afin d'épaissir localement ladite lame (12).

4. Procédé selon la revendication 3, comprenant les étapes consistant à :
c1) positionner le deuxième stratifié (11) dans une cavité (R) de l'outil de formage (F1) avant de positionner le premier stratifié (13a) sur le même outil de formage (F1) dans ladite étape c).

5. Procédé selon la revendication 4, dans lequel ladite étape c1) est précédée par les étapes consistant à :
b1) couper au moins un bord (11a) du deuxième stratifié de renfort plat (11) à un angle de coupe prédéterminé différent de 90° par rapport au plan de support (B) du mat (20) du deuxième stratifié (11).
